**Europäisches Patentamt**

**European Patent Office**

**Office européen des brevets**

(19)

(11) Publication number : **0 540 328 A2**

(12) # EUROPEAN PATENT APPLICATION

(21) Application number : **92309912.1**

(22) Date of filing : **29.10.92**

(51) Int. Cl.⁵ : **G10L 5/06**

(30) Priority : **31.10.91 JP 311571/91**

(43) Date of publication of application :
**05.05.93 Bulletin 93/18**

(84) Designated Contracting States :
**DE FR GB**

(71) Applicant : **INTERNATIONAL BUSINESS MACHINES CORPORATION**
**Old Orchard Road**
**Armonk, N.Y. 10504 (US)**

(72) Inventor : **Nishimura, Masafumi**
**2-10-1-1303, Nakagawa, Kouhoku-ku**
**Yokohama-shi, Kanagawa-ken (JP)**

(74) Representative : **Burt, Roger James, Dr.**
**IBM United Kingdom Limited Intellectual Property Department Hursley Park Winchester Hampshire SO21 2JN (GB)**

(54) **Voice recognition.**

(57) This invention is intended to enable initial ends to be opened irrespective of the configurations of Markov models and without entailing a large increase in amount of processing in Markov model aided voice recognition. For word models dependent on input length, matching paths are started in sequence within the initial end open ranges of sequences of input labels, and the initial likelihood values of the matching paths to be started are set at the greatest median likelihood value of other paths at the start. Matching is carried out in synchronization with input labels, and paths are disbranched in label units by applying beam search techniques to reduce amount of computation. For word models dependent on word model length, matching paths are started in sequence in each state within the initial end open range of each word model, and the initial likelihood values of the matching paths to be started are set at the greatest median likelihood value of other paths at the start. Matching is carried out in synchronization with states, and paths are disbranched in state units by applying beam searching techniques to reduce amount of computation.

Figure 2

This invention relates to a voice recognition apparatus utilizing a Markov model, which is robust to word boundary detection errors caused from noises and ambiguous vocalization with little increase in the required amount of computation and storage capacity.

Voice recognition utilizing a Markov model is intended to recognize voices from a probabilistic point of view. For example, according to one of the prior art techniques, features of a voice are first analyzed for frequency in regular cycles (called frames) and are then quantized into vectors, which are then converted into a sequence of labels (symbols). One Markov model is set for each of these labels. Also, a sequence of such Markov models (called word Markov models) is assigned to each word based on a sequence of labels (called word baseform) for a voice to be registered. A plurality of states and transitions between these states are defined for each Markov model. These transitions are each assigned a probability of occurrence, and each state or its transition is assigned a probability of outputting a label in that state or transition. Unknown input voice is converted into a sequence of labels, and each word Markov model defined by a word baseform determines. the probability of generating a sequence of labels on the basis of the above-mentioned probability of transition occurrence and probability of label output, herein after called parameters to find a word Markov model providing the highest probability of label generation. Recognition is attained based on this results.

Such Markov models in label units are known as Fenonic-Markov models. Models associated with one another by the same label name are handled as common models in model training and voice recognition. Fenonic-Markov models are described in detail in the following article:

(1) "Acoustic Markov Models Used in The Tangora Speech Recognition System" (Proceedings of ICASSP'88, 1988, Apr., S11-3, L.R.Bahl, P.F.Brown, P.V.de.Souza, R.L.Mercer and M.A.Picheny)

In a voice recognition apparatus using these models, a significant reduction in throughput can be effected by carrying out processing based on Viterbi algorithm in the input frame synchronous mode in combination with another algorithm known as beam search. The beam search algorithm is described in detail in the following article:

(2) "The HARPY Speech Recognition System" (Ph.D. Thesis, Carnegie-Mellon Univ.1976, Apr., B.Lowere)

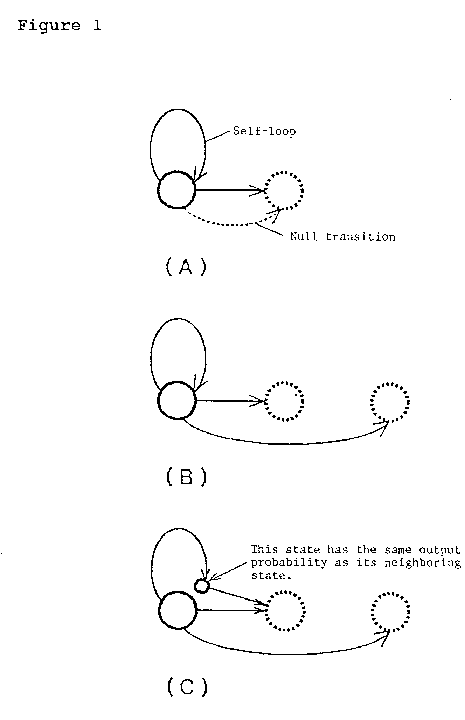

Voice recognition in general presupposes processing for detecting the vocalization intervals of unknown input voices. This processing, known as voice interval detection, requires high accuracy and persistence, and particularly its accuracy significantly affects recognition accuracy. Especially in voice recognition using the above-mentioned Fenonic-Markov models, maldetection of the start of a word may lead directly to malrecognition inasmuch as these models are highly flexible in their capabilities of expression in the temporal-axial direction. With techniques for voice recognition using DP matching, maldetection is coped with by opening the matching ranges of initial and terminal ends. However, opening initial ends with high efficiency and accuracy is less easy than opening terminal ends. In DP matching, no more than artificial opening is effected by local changes in restrictions on paths. Whereas terminal ends can be processed in a similar manner to DP matching also when the Fenonic-Markov model is employed, Fenonic-Markov model, in principle, does not allow local alterations in model shapes and hence necessitate opening initial ends by use of a model with a null transition and a self-loop, as in Figure 1 (A). However, this model is too high in degrees of freedom to produce good results in voice recognition. On the other hand, employing a model in a shape dependent only on input frame length, or a model requiring normalization by input frame length, could open a Fenonic word model easily without using a null transition, yet to open the input end, it is still necessary to employ a model with a self-loop, as in Figure 1 (B). In this case as well, the recognition accuracy of such a model in detecting voice: intervals exactly is rat.her low, compared with a model with a symmetrical gradient limit, inasmuch as the degree of freedom is heightened at the input end, as in Figure 1 (C). The same also applies to models in a shape dependent on baseform length, or models requiring normalization by baseform length. Since, in this way, Fenonic-Markov models, in principle, necessitate employing a model of the same type as that employed in detecting the start of a word in expressing a voice as a whole, it is not so effective to open initial ends through a change in model.

Moreover, using the beam search technique helps delete paths of lower likelihood in input frame units, but nevertheless there is little possibility of paths obtained by artificial opening, such as self-loops and null transitions, remaining when a boundary detection error occurs. This is because most models are so trained as to have higher probabilities through diagonal paths inasmuch as the training of Fenonic-Markov models is provided commonly over the entire vocalization. One method proposed to cope with these problems is to provide a common model representing a mute element at the top of each word model. Such mute models are dealt with in the following article in relation to their application to continuous length models;

(3) "A Speech Recognition Method Using HMM with Duration Distribution Introduction of Probabilistic Detection of End Points," (Proceedings of Acoustical Society of Japan, 3-1-10, Mar. 1986, Masafumi Nishimura & Masaaki Ohkohchi)

This method is unsuitable for real-time processing because it necessitates allocating end points with some mute element assigned, and also necessitates training mute models by noises beforehand in order to cope with noises at the start of a word. Hence, it is difficult to attain highly accurate learning.

On the other hand, in recent years, some methods of detecting a plurality of initial end point candidates positively have been proposed as improvements on voice interval detecting apparatus. These methods are described in the following article:

(4) "Telephonic Speech Recognition Based on Word Boundary Hypothesis and Multiple LPC Similarity Measures," the Transactions of the Institute of Electronic: and Communication Engineers of Japan, Vol.J71-D, No. 1, pp.59-66, Jan. 1988; Tsuneo Nitta, Kensuke Uehara, and Sadakazu Watanabe.

These methods, however, necessitate performing operations, such as matching, on each separate voice interval when a plurality of initial end points are detected, with the result of very low computation efficiency. Although computation efficiency can be improved by performing DP matching operations on the cumulative distance in each alternative voice interval, applying these methods to Fenonic-Markov models entails employing such self-loop models and mute models as described above.

This invention is intended to enable efficient and accurate voice recognition even when a word boundary is detected through error on account of noises or ambiguous vocalization or otherwise is not defined uniquely.

In order to achieve the above-stated purpose, each matching path is initiated from each point within an initial end open range. When the initial end of an input voice (i.e., a sequence of input labels) is opened, matching with a lexical word is started within an initial end open range, e.g., at each interval of several frames from the initial end detected. Also, when the initial end of a word voice model is opened, matching with a sequence of input labels is started in each state within the initial end open range.

When initial points differ, the likelihood values of matching as they are cannot be evaluated by the same criteria. Then, a predetermined median likelihood value, e.g., the greatest median likelihood value, is set as the initial value of the path in question to enable evaluation of the likelihood values of paths with different initial points on the same level. In this case, the problem of an increase in the number of paths is eliminated by disbranching improbable paths during a beam search.

This invention can be also applied to a case where a plurality of initial point candidates are detected and a path is initiated at each initial point candidate. In this case, a predetermined median likelihood value may be used for matching from the second candidate initial end onward.

In practice, recognition processing based on the Viterbi algorithm and beam search is effected in the input. frame synchronous mode by use of a Fenonic-Markov model (with or without a self-loop) of the input frame length dependent type. The greatest likelihood value then determined secondarily for each input frame is used as an initial likelihood value when a new path is provided within an initial end open range and likelihood calculation is restarted from the top of a word model.

The initial end opening on the input side is thus effected artificially. This method is equivalent to the evaluation of a model reconfigured by assigning parts of the word model that gave the highest likelihood within the initial end open range to the top of each target lexical word model.

It is assumed that a sequence of labels for an input voice is expressed as $L=l(1)l(2)...l(1)$ and that a Fenonic word model configured on the baseform of word w be expressed as $F(w)=f(w,1)f(w,2)... f(w,J)$. Then, assuming that the likelihood given by $F(w)$ in state j is $E(w,i,j)$ when the sequence of input labels till time i, $.l(1)l(2)...l(i)$, is evaluated, the highest likelihood at time i is given by the following equation:

$$\text{Emax}(i) \;=\; \max_{w,j} E(w,i,j)$$

This value is also used for disbranching during a beam search. Assuming that an initial end open range is Tf, each initial end is artificially opened by adding one new path after another having the following likelihood as their initial value when $i \leq Tf$:

$$E(w,i,l) \;=\; \text{Emax}(i)$$

Also when a plurality of initial- end points are given from the voice interval detecting device, those initial end points are opened likewise The initial end of a Fenonic word model can also be artificially opened likewise by using a Fenonic-Markov model dependent on baseform length.

An embodiment of the invention will now be described by way of example only, with reference to the accompanying drawings wherein:

Figure 1 shows examples of Fenonic-Markov models;

Figure 2 is a block diagram of one embodiment of this invention;

Figure 3 is a flowchart of the operation of the labeling device 8 in the embodiment shown in Figure 2;

Figure 4 is an explanatory drawing of the Fenonic-Markov models used in the embodiment shown in Figure 2;

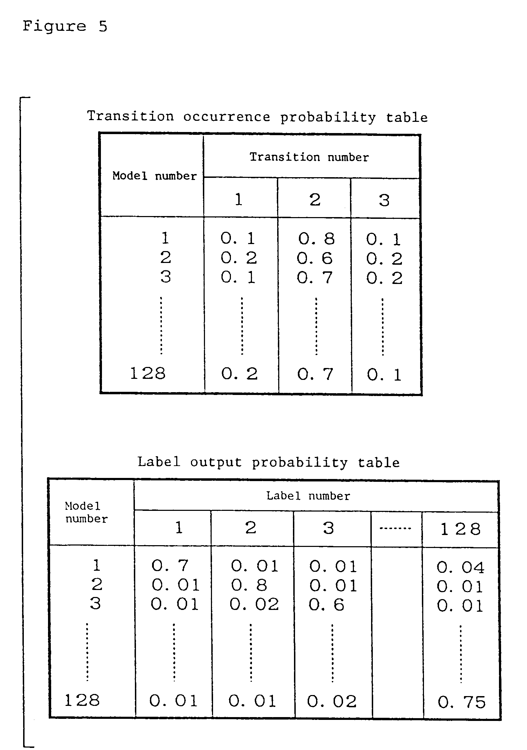

Figure 5 is an explanatory drawing of the Fenonic-Markov models used in the embodiment shown in Figure 2;

Figure 6 is an explanatory drawing of the operation of the recognizer 13 in the embodiment shown in Figure 2; and

Figure 7 is a flowchart of the operation of the recognizer 13 in the embodiment shown in Figure 2.

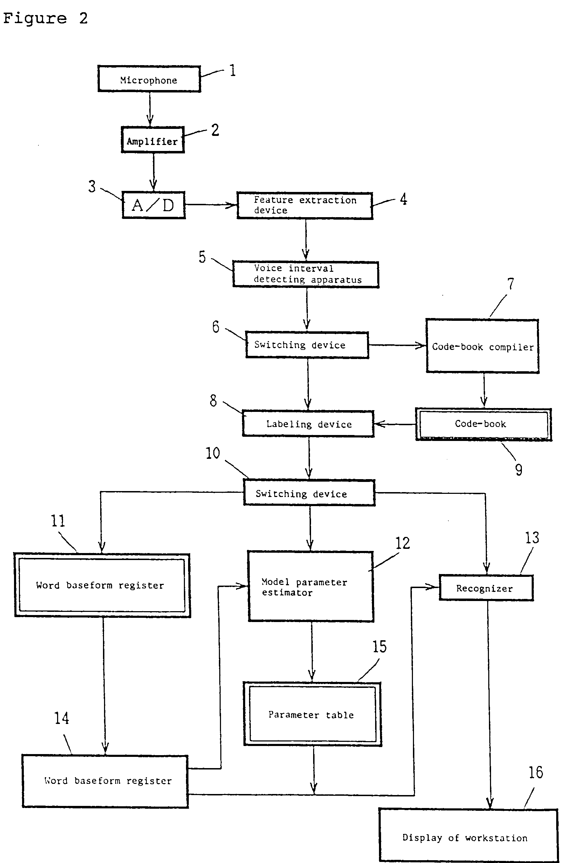

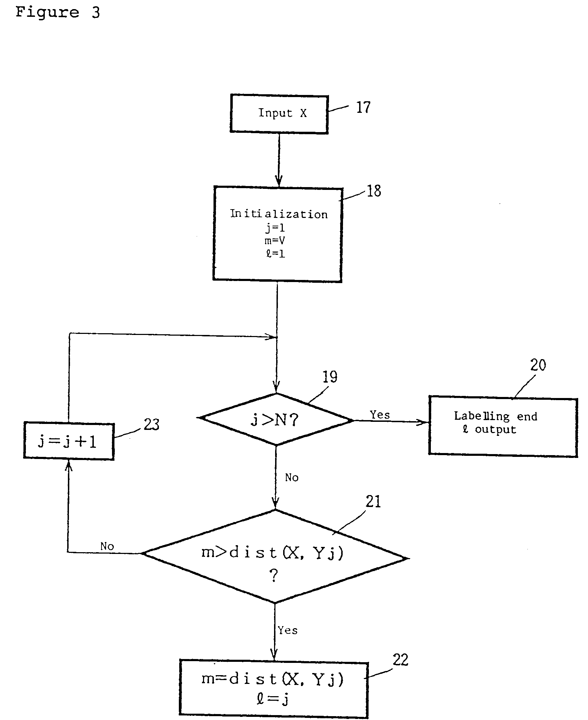

Referring to the drawings, this invention will be explained for an embodiment where this invention is applied to a word voice recognition apparatus based on a Fenonic-Markov model. Figure 2 is the entire arrangement of the embodiment, wherein an input voice is fed via a microphone 1 and an amplifier 2 into an analog-to-digital (A/D) converter 3, where the voice is converted into digital data. The digitized voice data is then fed into a feature extraction device 4. In the feature extraction device 4, the voice data first undergoes a discrete Fourier transformation and is then brought out as output from a 19-channel critical bandpass filter reflecting acoustic characteristics together with logarithmic power values. This output is then sent to a word voice interval detector 5 at intervals of about 10 ms, or in "frame" units. Only the features of frames judged as falling within a word voice interval are sent to the next switching device 6 and sent to either a code-book compiler 7 or labeling device 8. The switching device 6 switches to the code-book compiler 7 when a code-book is estimated, and features are fed from the feature extraction device 4. The code-book compiler 7 produces a code-book 9 of 128 types of labels by clustering. When a voice is recognized, when a word baseform is registered, or when the parameters of a Fenonic-Markov model is estimated, the switching device 6 switches to the labeling device 8. The labeling device 8 assigns a label to each frame by reference to the code-book 9. Labeling is effected as shown in Figure 3, for example. In Figure 3, X denotes an input feature; Yj denotes the feature of the j-th label; N denotes the size (=128) of a code-book; dist (X, Yj) denotes the Euclidean distance between X and Yj; m denotes the least value of dist (X, Yj) up to each point of time. The parameter "m" is set at: a very large value, V, at the outset. As evident from the figure, the input feature, X, is compared sequentially with each label feature, so that the most likely one or one at the least distance is outputted as an observed label (label number), 1.

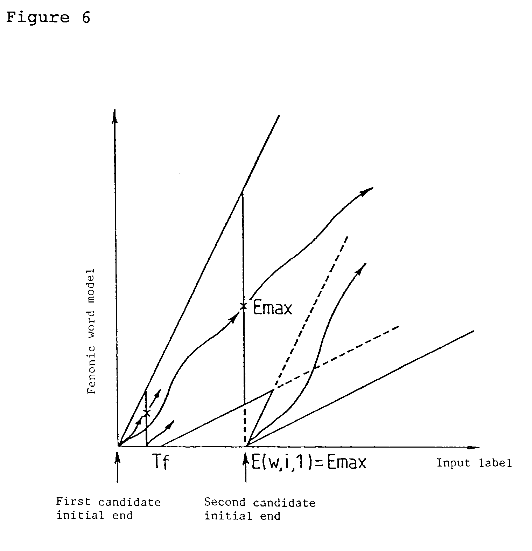

A sequence of word labels outputted from the labeling device 8 is fed through the switching device 10 into either one of a word baseform register 11, a model parameter estimator 12, or a recognizer 13. When a word baseform is registered, the switching device 10 switches to the word baseform register 11, so that the sequence of labels is fed into the word baseform register 11 to produce a word baseform table 14. When the parameters of a Markov model are estimated, the switching device 10 switches to the model parameter estimator 12, which then trains the model by use of the sequence of labels and the baseform table 14 and determines the parameter values of a parameter table 15. When recognition is performed, the switching device 10 switches to the recognizer 13, which then recognizes the input voice by reference to the input label sequence, baseform table 14, and parameter table 15. The operation of the recognizer 13 will be described in detail later referring to the drawings in Figure 6 and subsequent figures.

The output from the recognizer 13 is supplied to a workstation 16 and is displayed on its display, for example. In figure 2, all the means other than the microphone 1, the amplifier 2, the A/D converter 3, and the display 16 are implemented as software on the workstation and a voice processing card in the workstation.

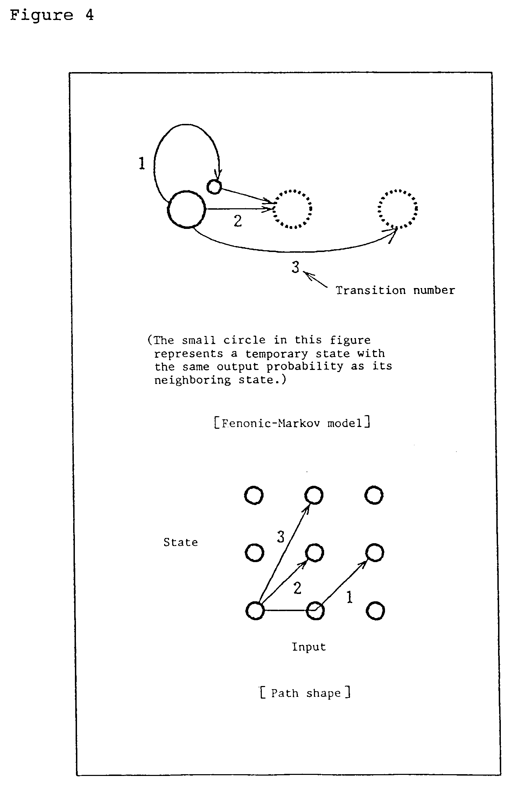

Figure 4 shows the structure of the Fenonic-Markov model used in this embodiment. This model is of the input frame length dependent type with symmetrical gradient limits. The small circle in Figure 4 shows a temporary state with the same label output probability as their neighboring states have, and constitutes a Duration model with length 2. The drawing under this model is a schematic representation of the paths of this model on a lattice, which represents an input frame length dependent model with symmetrical gradient limits. 128 such models are prepared in one-for-one correspondence to label numbers. Each model has a parameter table of probabilities of outputting 128 types of labels and probabilities of three types of transition occurring.

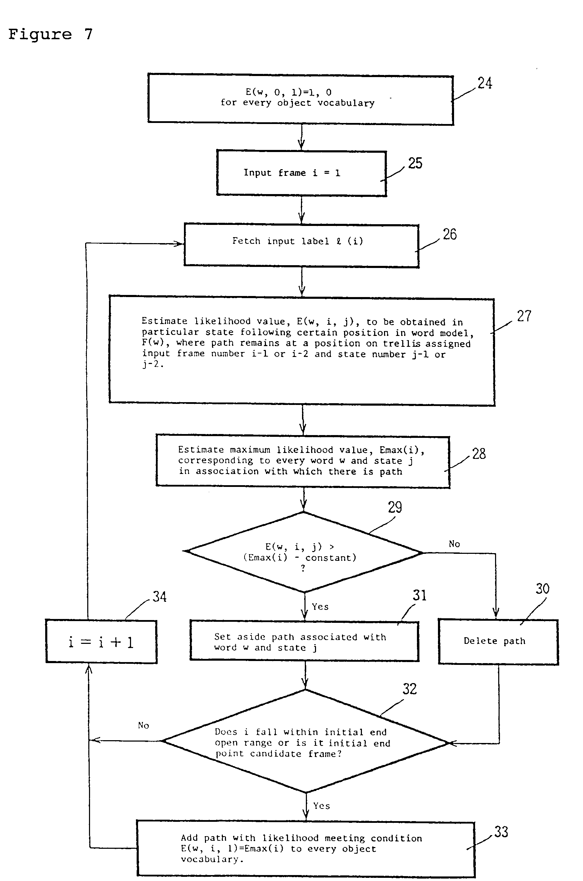

The following describes the operation of the recognizer 13 with reference to Figures 6 and 7. Figure 6 shows the range of recognition and the phases of initial end opening, where the ordinate represents a Fenonic word model built by basing on a word baseform, whereas the abscissa represents a sequence of input labels. Recognition processing is effected in synchronization with input labels. In this embodiment, a plurality of candidate initial end points are obtained from the word voice interval detector 5. The following describes a flow of processing synchronized with input with reference to Figure 7. It is assumed here that an initial likelihood value has been set for every object vocabulary (step 24). When the leading input label in a voice interval is obtained (step 26), a likelihood value is determined vertically on the lattice within the range allowed by the gradient limits of this model based on the Viterbi algorithm. This operation is performed on each Fenonic word-model, F, of every object vocabulary, so that a likelihood valve, E, for each point on the lattice is recorded together with the word number (step 27) that provides that likelihood value. This operation is performed in frame synchronous mode each time an input label is obtained. Whenever one frame has been processed, a maximum vertical likelihood value, E max (i), corresponding to the input frame, i, on the lattice (step 28) is determined. Only valves falling within a certain range from the maximum likelihood value are kept on record (steps 29, 30, and 31) for use in processing the next input frame. That is, in subsequent frames, processing is continued only on the positions of words and states whose values remain on the lattice of a preceding frame. If there remains a value on the lattice, it is sent that a path is existent. This processing is technique called beam search. If the input frame falls within an initial end open range or one of a plurality of initial end point candidates (step 32), a new path which processing from the top of a Fenonic word model is to be carried out is added to every object vocabulary as shown in Figure 6 (step 33). At the same time, the predetermined maximum likelihood value, E max (i), of the frame is given as the initial value of each newly added path (step 33).

In the above-mentioned embodiment, initial end opening on the Fenonic word model side can be facilitated by setting up an initial end open range on the starting end side of the Fenonic word model and starting paths form each of the Fenonic Markov models (substantially word baseform labels) within the range. Inasmuch as the Fenonic word model adopted in this embodiment is of the input dependent type and therefore likelihood values can be evaluated by the same criterion no matter whichever a part of the word model a path may begin from, it is unnecessary to set the median likelihood value at an initial value.

This invention is not limited to the embodiment described above, but allows a wide variety of modification within a scope not departing from the purport. For example, regarding Markov models of the word model length (baseform length) dependent type, the initial ends of word models can be opened in a similar way.

Moreover, word models of the Markov model type other than Fenonic word models may be employed as word models. Again, when there are a plurality of initial end candidates, it is allowed to set up an initial end open range for each of the initial end candidate so that initial end opening can be effected for each range.

This invention enables initial ends to be opened irrespective of the configurations of Markov models and without entailing a large increase in amount of processing in Markov model aided voice recognition. For word models dependent on input length, matching paths are started in sequence within the initial end open ranges of sequences of input labels, and the initial likelihood values of the matching paths to be started are set at the greatest median likelihood value of other paths at the start. Matching is carried out in synchronization with input labels, and paths are disbranched in label units by applying beam search techniques to reduce amount of computation. For word models dependent on word model length, matching paths are started in sequence in each state within the initial end open range of each word model, and the initial likelihood values of the matching paths to be started are set at the greatest median likelihood value of other paths at the start. Matching is carried out in synchronization with states, and paths are disbranched in state units by applying beam searching techniques to reduce amount of computation.

As has been explained above, this invention enables realization of voice recognition robust to word boundary detection errors due to noises or ambiguous vocalization without entailing increasing amount of computation or storage capacity.

## Claims

1 A method of voice recognition comprising:

retaining information on a set of first labels representing an acoustic type assignable to one infinitesimal interval of time, information on the voice model of a vocabulary word expressed as a chained set of Markov models corresponding respectively to a set of second labels representing an acoustic type assignable to another infinitesimal interval of time and information on the probability values of said Markov models;

generating corresponding first labels from an input voice sequentially at said infinitesimal intervals of time;

matching said voice model of said vocabulary word with said sequence of first labels in synchronization with said infinitesimal intervals of time;

accumulating the probability values of said Markov models; and thus obtaining the likelihood that said vocabulary word corresponds to said input voice,

characterised by the steps of:

setting about matching the word model of a vocabulary word with a sequence of first labels beginning with the first label generated in the applicable interval of time during each of said infinitesimal intervals of time within an initial end open range of said input voice,

selecting a predetermined median likelihood value during each of said infinitesimal intervals of time within said initial end open range,

setting the initial value of likelihood at said predetermined median likelihood value corresponding to said infinitesimal interval of time when the matching of the voice model of said vocabulary word is started, and

abandoning        improbable        matching        paths against said median likelihood value during each of said infinitesimal intervals of time.

2. A method of voice recognition as claimed in Claim 1 wherein said initial end open range is determined based on detection of one or more initial end candidates of an input voice.

3. A method of voice recognition as claimed in Claim 2 wherein said initial end open range is determined based on the first initial end candidate, and matching is started with said predetermined median likelihood value at the point of time set as an initial value determined based on the subsequent initial end candidates when a plurality of initial end candidate of an input voice are detected.

4. A method of voice recognition as claimed in Claim 2 wherein said initial end open range is determined based on each of said initial end candidates when a plurality of initial end candidates of an input voice are detected.

5. A method of voice recognition as claimed in any preceding Claim wherein the matching of the voice model of said vocabulary word is started with each of the Markov models within the initial end open range of the voice model.

6. A method of voice recognition as set forth in any preceding Claim wherein said predetermined median likelihood value is set as the greatest likelihood value.

7. A method of voice recognition comprising retaining information on a set of first labels representing an acoustic type assignable to one infinitesimal interval of time, information on the voice model of a vocabulary word expressed as a Markov model, and information on the probability value of said Markov model;

generating corresponding said labels from an input voice sequentially at said infinitesimal intervals of time;

matching said voice model of said vocabulary word with said sequence of first labels in synchronization with said infinitesimal intervals of time;

accumulating the probability values of said Markov model;

and obtaining the likelihood that said vocabulary word corresponds to said input voice,

characterised by the steps of:

detecting one or more initial ends of said input voice;

setting about matching the word model of a vocabulary word with a sequence of first labels beginning with the first label generated in the applicable interval of time during said infinitesimal interval of time corresponding to said one initial end or each of said infinitesimal intervals of time corresponding to said more than one initial end;

selecting a predetermined median likelihood value during each of said infinitesimal time intervals corresponding to the second and subsequent initial ends when more than one such initial end occurs;

setting the initial likelihood value at said specified median likelihood value corresponding to said infinitesimal interval of time when word model matching is started during each of said infinitesimal intervals of time corresponding to said second and subsequent initial ends; and

abandoning improbable matching paths on the basis of said median likelihood value during each of said infinitesimal intervals of time.

8. A method of voice recognition comprising:

retaining information on a set of first labels representing an acoustic type assignable to one infinitesimal interval of time, information on the voice model of a vocabulary word expressed as a Markov model, and information on the probability value of said Markov model; generating corresponding said labels from an input voice sequentially at said infinitesimal intervals of time;

matching said voice model of said vocabulary word with said sequence of first labels in synchronization with said infinitesimal intervals of time;

accumulating the probability values of said Markov model;

and obtaining the likelihood that said vocabulary word corresponds to said input voice,

characterised by the steps of:

setting about matching the word model of a vocabulary word with a sequence of first labels beginning with the first label generated in the applicable interval of time during each of said infinitesimal intervals of time within the initial end open range of said input voice, selecting a predetermined median likelihood value during each of said infinitesimal intervals of time within said initial end open range,

setting the initial likelihood value at said predetermined median likelihood value corresponding to said matching starting infinitesimal interval of time when the matching of said word model is started, and

abandoning improbable matching paths on the basis of said median likelihood value during each of said infinitesimal intervals of time.

9. A method of voice recognition comprising:

retaining information on a set of first labels representing an acoustic type assignable to one infinitesimal interval of time, information on the voice model of a vocabulary word expressed as a Markov model, and information on the probability value of said Markov model;

generating corresponding said labels from an input voice sequentially at said infinitesimal intervals of time;

matching said voice model of said vocabulary word with said sequence of first labels in synchronization with said infinitesimal intervals of time; accumulating the probability values of said Markov model;

and obtaining the likelihood that said vocabulary word corresponds to said input voice,

characterised by the steps of:

setting about matching said sequence of first labels with the remaining part of the applicable voice model in each state within the initial end open range of said voice model,

selecting a predetermined median likelihood value in each of said states within said initial end open range,

setting the initial likelihood value at said predetermined median likelihood value in said matching starting state when the matching of said sequence of first labels is started, and abandoning improbable matching paths on the basis of said median likelihood value in each of said states.

10. Voice recognition apparatus comprising:

means for storing information on a set of first labels representing an acoustic type assignable to one infinitesimal interval of time, information on the voice model of a vocabulary word expressed as a chained set of Markov models corresponding respectively to a set of second labels representing an acoustic type assignable to another infinitesimal interval of time, and information on the probability values of said Markov models;

means for generating corresponding first labels from an in put voice sequentially at said infinitesimal intervals of time;

means for matching said voice model of said vocabulary word with said sequence of said first labels in synchronization with said infinitesimal intervals of time;

means for accumulating the probability values of said Markov models; and means for obtaining the likelihood that said vocabulary word corresponds to said input voice,

characterised by:

means for setting about matching the word model of a vocabulary word with a sequence of first labels beginning with the first label generated in the applicable interval of time during each of said infinitesimal intervals of time within said initial end open range of said input voice;

means for selecting a predetermined median likelihood value during each of said infinitesimal intervals of time within said initial end open range;

means for setting the initial value of likelihood at said predetermined median likelihood value corresponding to said infinitesimal interval of time when the matching of the voice model of said vocabulary word is started; and

means for abandoning improvable matching paths on the basis of said median likelihood value during each of said infinitesimal intervals of time.

Figure 1

Self-loop

Null transition

( A )

( B )

This state has the same output
probability as its neighboring
state.

( C )

Figure 2

Figure 3

Input X ⎯ 17

Initialization
j=1
m=V
ℓ=1
⎯ 18

j >N? ⎯ 19

Yes → Labelling end
ℓ output ⎯ 20

No

j=j+1 ⎯ 23

m>dist(X, Yj)
?
⎯ 21

No

Yes

m=dist(X, Yj)
ℓ=j
⎯ 22

Figure 4

Transition number

(The small circle in this figure represents a temporary state with the same output probability as its neighboring state.)

[Fenonic-Markov model]

State

Input

[ Path shape ]

Figure 5

Transition occurrence probability table

| Model number | Transition number | | |
|---|---|---|---|
| | 1 | 2 | 3 |
| 1 | 0. 1 | 0. 8 | 0. 1 |
| 2 | 0. 2 | 0. 6 | 0. 2 |
| 3 | 0. 1 | 0. 7 | 0. 2 |
| ⋮ | ⋮ | ⋮ | ⋮ |
| 128 | 0. 2 | 0. 7 | 0. 1 |

Label output probability table

| Model number | Label number | | | | |
|---|---|---|---|---|---|
| | 1 | 2 | 3 | ------- | 1 2 8 |
| 1 | 0. 7 | 0. 01 | 0. 01 | | 0. 04 |
| 2 | 0. 01 | 0. 8 | 0. 01 | | 0. 01 |
| 3 | 0. 01 | 0. 02 | 0. 6 | | 0. 01 |
| ⋮ | ⋮ | ⋮ | ⋮ | | ⋮ |
| 128 | 0. 01 | 0. 01 | 0. 02 | | 0. 75 |

Figure 6

Figure 7

```
                    ┌─────────────────────────────────────┐
                    │    E(w, 0, 1)=1, 0                   │──24
                    │    for every object vocabulary       │
                    └─────────────────────────────────────┘
                                    │
                                    ▼
                    ┌─────────────────────────────────────┐
                    │    Input frame i = 1                 │──25
                    └─────────────────────────────────────┘
                                    │
                                    ▼
           ┌──────────────────────────────────────────────────┐
    ┌─────▶│    Fetch input label ℓ (i)                       │──26
    │      └──────────────────────────────────────────────────┘
    │                             │
    │                             ▼
    │    ┌──────────────────────────────────────────────────────────┐
    │    │  Estimate likelihood value, E(w, i, j), to be obtained in │──27
    │    │  particular state following certain position in word model,│
    │    │  F(w), where path remains at a position on trellis assigned│
    │    │  input frame number i-1 or i-2 and state number j-1 or    │
    │    │  j-2.                                                     │
    │    └──────────────────────────────────────────────────────────┘
    │                             │
    │                             ▼
    │        ┌────────────────────────────────────────────────┐
    │        │  Estimate maximum likelihood value, Emax(i),    │──28
    │        │  corresponding to every word w and state j      │
    │        │  in association with which there is path        │
    │        └────────────────────────────────────────────────┘
    │                             │
    │                             ▼                    29
    │                         ◇─────────────◇
    │                    E(w, i, j) >              No
    │              ◇   (Emax(i) - constant)  ◇──────────┐
    │                           ?                        │
    │                         ◇─────────────◇            │
    │                             │ Yes                  │
    │  ┌──────────┐    ┌─────────────────────┐    ┌──────────────┐
    │  │ i = i+1  │    │ Set aside path       │    │ Delete path  │──30
    │  │          │──34│ associated with      │──31│              │
    │  └──────────┘    │ word w and state j   │    └──────────────┘
    │       ▲          └─────────────────────┘            │
    │       │                     │                        │
    │       │                     ▼              32        │
    │       │            ◇─────────────────────◇           │
    │       │   No    Does i fall within initial end       │
    │       └────────◇  open range or is it initial end ◇◀─┘
    │                   point candidate frame?
    │                ◇─────────────────────◇
    │                          │ Yes
    │          ┌────────────────────────────────────────┐
    └──────────│ Add path with likelihood meeting condition│──33
               │ E(w, i, 1)=Emax(i) to every object      │
               │ vocabulary.                              │
               └────────────────────────────────────────┘
```